# EUROPEAN PATENT APPLICATION

(11) **EP 3 557 022 A1**
(43) Date of publication of application: **23.10.2019**
(21) Application number: 17900349.6
(22) Date of filing: 17.03.2017
(51) Int. Cl.: F02B 23/06, F02F 3/28

(54) **DIESEL ENGINE**

(71) Applicant: Mazda Motor Corporation, Aki-gun Hiroshima 730-8670 (JP)
(72) Inventor: SUMIMOTO, Takashi, Hiroshima 730-8670 (JP); KANZAKI, Jun, Hiroshima 730-8670 (JP); KIM, Sangkyu, Hiroshima 730-8670 (JP); KATAOKA, Motoshi, Hiroshima 730-8670 (JP)
(74) Representative: Müller-Boré & Partner Patentanwälte PartG mbB
(86) International application number: PCT/JP2017/010840
(87) International publication number: WO 2018/167938

(57) **Abstract**

The diesel engine (1) comprises: a cylinder head (6) covering one end of a cylinder (2); a piston (10) having a crown surface (10a) opposed to the cylinder head and performing a reciprocating movement within the cylinder; and a fuel injector (34) attached to the cylinder head. The crown surface of the piston is formed with a cavity (12) which is concaved toward a side opposite to the cylinder head and has a round shape in top plan view, and a groove (64) concaved from a periphery of the cavity toward a radially outward side of the piston. The groove extends from the lower end on the side opposite to the cylinder head, toward the upper end on the side of the cylinder head, while inclining in a circumferential direction of the piston. The fuel injector is formed with a nozzle hole (56) directed toward the groove.

## Description

### TECHNICAL FIELD

The present invention relates to a diesel engine, and more particularly to a diesel engine which comprises a cylinder head covering one end of a cylinder, a piston having a crown surface opposed to the cylinder head and performing a reciprocating movement within the cylinder, and a fuel injector attached to the cylinder head.

### BACKGROUND ART

In the field of diesel engines, particularly relatively small-sized diesel engines for use in passenger vehicles or the like, it is known to employ a piston whose crown surface is formed with a reentrant cavity, i.e., a cavity having a raised central portion and an upwardly-narrowed opening portion (see, for example, the following Patent Document 1).

In a diesel engine as disclosed in the Patent Document 1, which comprises a piston formed with the reentrant cavity, when a fuel injector is operated to inject a relatively large amount of fuel, e.g., in a medium or high engine load range, the flow of a fuel spray is generated such that, after reaching the periphery of the cavity, the fuel spray turns around along a wall surface of the cavity (i.e., changes direction toward the side of a radial center of the piston), and thereby mixing between the fuel spray and air is promoted. This makes it possible to reduce the amount of NOx and soot generated in a fuel-rich region, due to high temperatures caused by local combustion, and the lack of oxygen.

### CITATION LIST

### [Parent Document]

Patent Document 1: JP 2015-232288A

### SUMMARY OF INVENTION

### [Technical Problem]

Meanwhile, in a diesel engine, fuel injected into a piston cavity flows within a combustion chamber while undergoing diffusion combustion. However, in a relatively small-sized diesel engine for use in a passenger vehicle or the like, due to its relatively small combustion chamber, a fuel spray undesirably reaches an inner surface of a cylinder head or cylinder liner having a relatively low temperature, before completion of the fuel combustion. This results in an increase in cooling loss, and thus a deterioration in engine fuel economy performance.

The present invention has been made to solve the above problem, and an object thereof is to provide a diesel engine capable of preventing a fuel spray from reaching an inner surface of a cylinder head or cylinder liner having a relatively low temperature, before completion of fuel combustion, thereby reducing cooling loss.

### [Solution to Technical Problem]

In order to achieve the above object, the present invention provides a diesel engine comprising: a cylinder head covering one end of a cylinder; a piston having a crown surface opposed to the cylinder head and performing a reciprocating movement within the cylinder; and a fuel injector attached to the cylinder head, wherein the crown surface of the piston is formed with a cavity which is concaved toward a side opposite to the cylinder head and which has a round shape in top plan view, and a groove which is recessed radially outward from a periphery of the cavity, the groove has one, first, end on a side opposite to the cylinder head and the other, second, end on a side of the cylinder head, and extends from the first end toward the second end while inclining in a circumferential direction of the piston, and the fuel injector is formed with a nozzle hole directed toward the groove.

In the diesel engine of the present invention having the above feature, the groove concaved from the periphery of the cavity toward the radially outward side of the piston extends from the first end on the side opposite to the cylinder head toward the second end on the side of the cylinder head, while inclining in the circumferential direction of the piston, and the nozzle hole of the fuel injector is directed toward the groove, so that a fuel spray injected from the nozzle hole moves along the groove gently and helically upwardly toward the side of the cylinder head, while changing direction to the circumferential direction of the piston. Thus, as compared with the case where a fuel spray injected from the fuel injector keeps moving in an injection direction and reaches an inner surface of the cylinder head or cylinder liner, as in the conventional diesel engine, a moving path between a point at which a fuel spray is injected from the nozzle hole and a point at which the fuel spray subsequently reaches the inner surface of the cylinder head or cylinder liner can be extended. This makes it possible to prevent the fuel spray from reaching the inner surface of the cylinder head or cylinder liner having a relatively low temperature, before completion of fuel combustion, thereby reducing cooling loss.

Preferably, in the diesel engine of the present invention, the cylinder head is formed with an intake port so as to generate a swirl flow within the cylinder, and the groove extends from the first end on the side opposite to the cylinder head toward the second end on the side of the cylinder head, while inclining in a flow direction of the swirl flow.

According to this feature, the groove extends from the first end on the side opposite to the cylinder head toward the second end on the side of the cylinder head, while inclining in the flow direction of the swirl flow, so that it is possible to enable the fuel spray which has reached the second end of the groove on the side of the cylinder head to be drawn into the swirl flow flowing just above the groove and swirled about a central axis of the cylinder. This makes it possible to reliably extend the moving path between the point at which a fuel spray is injected from the nozzle hole and the point at which the fuel spray subsequently reaches the inner surface of the cylinder head or cylinder liner, thereby preventing the fuel spray from reaching the inner surface of the cylinder head or cylinder liner having a relatively low temperature, before completion of fuel combustion.

Preferably, in the diesel engine of the present invention, the crown surface of the piston is formed with a plurality of the grooves.

According to this feature, the flow direction of the fuel spray injected from the nozzle hole can be reliably changed to the circumferential direction of the piston by the plural grooves. This makes it possible to more reliably prevent the fuel spray from reaching the inner surface of the cylinder head or cylinder liner having a relatively low temperature, before completion of fuel combustion, thereby reducing cooling loss.

Preferably, in the diesel engine of the present invention, the fuel injector is formed with a plurality of the nozzle holes which are directed toward the plurality of the grooves, respectively, so as to inject fuel into the cavity in a radial pattern in top plan view.

According to this feature, the flow direction of fuel injected into the cavity in a radial pattern in top plan view can be more reliably changed to the circumferential direction of the piston by the grooves toward which the nozzle holes are directed, respectively. This makes it possible to more reliably prevent the fuel spray from reaching the inner surface of the cylinder head or cylinder liner having a relatively low temperature, before completion of fuel combustion, thereby reducing cooling loss.

Further, fuel sprays injected from the plural nozzle holes undergo directional change along corresponding ones of the plural grooves, and flow out of the corresponding grooves along the circumferential direction of the piston, so that a region containing a large amount of soot, in each of the fuel sprays which have flowed out of the corresponding grooves, can be brought into contact with a region containing a large amount of OH radical, in a neighboring one of the fuel sprays located on the side opposite to a direction along which the fuel spray flows out of the corresponding groove. This makes it possible to oxidize soot by OH radicals to reduce the amount of soot contained in exhaust gas.

### [Effect of Invention]

The diesel engine of the present invention can prevent a fuel spray from reaching the inner surface of the cylinder head or cylinder liner having a relatively low temperature, before completion of fuel combustion, thereby reducing cooling loss.

### BRIEF DESCRIPTION OF DRAWINGS

FIG. 1 is a schematic diagram showing the configuration of a diesel engine according to one embodiment of the present invention.
FIG. 2 is a top plan view schematically showing the arrangement of intake and exhaust ports in the diesel engine according to this embodiment.
FIG. 3 is a fragmentary sectional view of a distal end of a fuel injector in the diesel engine according to this embodiment.
FIG. 4 is a diagram showing one example of a fuel injection mode set to vary according to an operating state of the diesel engine according to this embodiment.
FIG. 5 is a perspective view of a piston in the diesel engine according to this embodiment.
FIG. 6 is a top plan view of the piston in the diesel engine according to this embodiment.
FIG. 7 is a fragmentary sectional view of the piston, a cylinder head, etc., taken along the line VII-VII in FIG. 6.
FIG. 8 is a perspective view conceptually showing the flows of fuel sprays within a combustion chamber in the diesel engine according to this embodiment.
FIG. 9 is a perspective view conceptually showing the flows of fuel sprays and the flow of air within the combustion chamber in the diesel engine according to this embodiment.
FIG. 10 is a fragmentary sectional view conceptually showing the flow of fuel spray within the combustion chamber in the diesel engine according to this embodiment, taken along the line X-X in FIG. 6.
FIG. 11 is a perspective view conceptually showing the flows of neighboring fuel sprays within the combustion chamber in the diesel engine according to this embodiment.

### DESCRIPTION OF EMBODIMENTS

With reference to the accompanying drawings, a diesel engine according to one embodiment of the present invention will now be described.

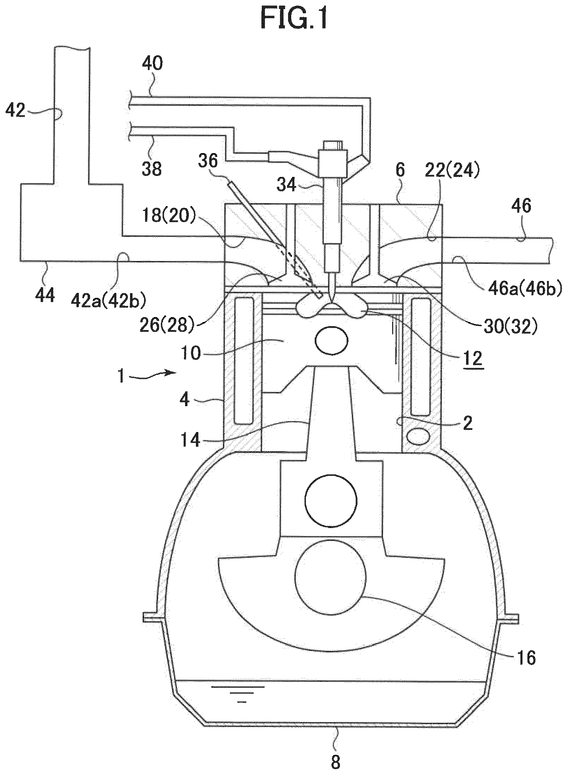

First of all, the configuration of the diesel engine according to this embodiment will be described with reference to FIGS. 1 to 4.

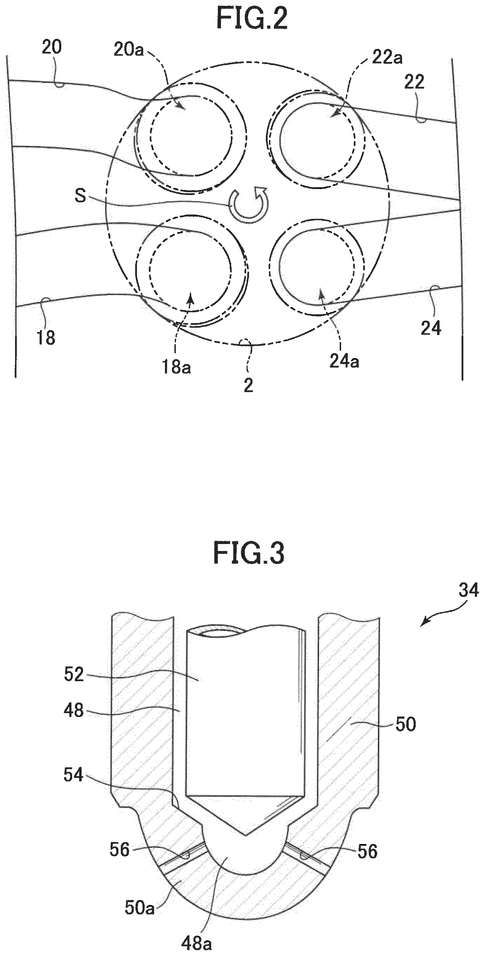

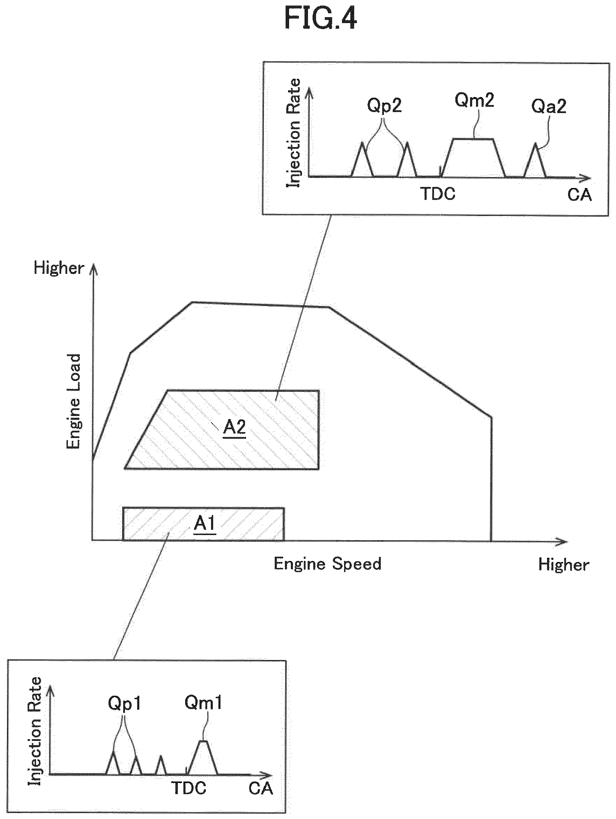

FIG. 1 is a schematic diagram showing the configuration of the diesel engine according to this embodiment, and FIG. 2 is a top plan view schematically showing the arrangement of intake and exhaust ports in the diesel engine according to this embodiment. Further, FIG. 3 is a fragmentary sectional view of a distal end of a fuel injector in the diesel engine according to this embodiment, and FIG. 4 is a diagram showing one example of a fuel injection mode set to vary according to an operating state of the diesel engine according to this embodiment.

In FIG. 1, the reference sign 1 denotes the diesel engine according to this embodiment. The diesel engine 1 comprises a cylinder block 4 provided with a plurality of cylinders 2, a cylinder head 6 disposed on the cylinder block 4, and an oil pan 8 disposed on the lower side of the cylinder block 4 to store therein lubricant oil. Each of the cylinders 2 is provided with a piston 10 fitted therein in a reciprocatingly movable manner. The piston 10 has a crown surface 10a formed with a cavity 12 concaved toward the side opposite to the cylinder head 6. The piston 10 is coupled to a crankshaft 16 through a connecting rod 14.

With respect to each of the cylinders 2, the cylinder head 6 is formed with two first and second intake ports 18, 20, and two first and second exhaust ports 22, 24. Each of the first and second intake ports 18, 20 is opened to one surface (lower surface) of the cylinder head 6 facing the piston 10, and to one lateral surface (intake-side lateral surface) of the cylinder head 6, and each of the first and second exhaust ports 22, 24 is opened to the surface of the cylinder head 6 facing the piston 10, and to the other lateral surface (exhaust-side lateral surface) of the cylinder head 6.

With respect to each of the cylinders 2, the cylinder head 6 is also provided with two first and second intake valves 26, 28 each configured to selectively open and close a respective one of two piston-side openings 18a, 20a of the first and second intake ports 18, 20, and two first and second exhaust valves 30, 32 each configured to selectively open and close a respective one of two piston-side openings 22a, 24a of the first and second exhaust ports 22, 24.

Further, with respect to each of the cylinders 2, the cylinder head 6 is provided with a fuel injector 34 for injecting fuel, and a glow plug 36 for heating intake air during a cold operation of the diesel engine 1 to enhance fuel ignitability. The fuel injector 34 is installed in a posture where one end thereof located on the side of the piston 10 faces a central region of the cavity 12. Here, the fuel injector 34 is coupled to a not-shown common rail via a fuel supply pipe 38, such that fuel can be supplied thereto from a not-shown fuel tank via the fuel supply pipe 38 and the common rail. Surplus fuel is returned to the fuel tank via a return pipe 40.

An intake passage 42 is connected to the intake-side lateral surface of the cylinder head 6, such that it communicates with the first and second intake ports 18, 20 for each of the cylinders 2. A not-shown air cleaner is provided at an upstream end of the intake passage 42 to filter intake air. Thus, intake air filtered by the air cleaner is supplied into each of the cylinders 2 via the intake passage 42 and the intake ports 18, 20. A surge tank 44 is interposed in the vicinity of a downstream end of the intake passage 42. A portion of the intake passage 42 on a downstream side with respect to the surge tank 44 is formed as a plurality of pairs of independent passages 42a, 42b branching correspondingly to the first and second intake ports 18, 20, respectively, and downstream ends of each pair of independent passages 42a, 42b are connected, respectively, to the intake ports 18, 20 of a corresponding one of the cylinders 2.

An exhaust passage 46 is connected to the exhaust-side lateral surface of the cylinder head 6 to discharge burned gas (exhaust gas) from the inside of the cylinders 2. An upstream portion of the exhaust passage 46 is formed as a plurality of pairs of independent passages 46a, 46b branching correspondingly to the first and second exhaust ports 22, 24, respectively, and upstream ends of each pair of independent passages 46a, 46b are connected, respectively, to the exhaust ports 22, 24 of a corresponding one of the cylinders 2.

As shown in FIG. 2, when viewed in a central axis of each of the cylinders 2 from the side of the cylinder head 6 (from above the cylinder 2), the piston-side openings 18a, 20a of the first and second intake ports 18, 20 and the piston-side openings 22a, 24a of the first and second exhaust ports 22, 24 are arranged in order of the piston-side opening 20a of the second intake port 20, the piston-side opening 18a of the first intake port 18, the piston-side opening 24a of the second exhaust port 24, and the piston-side opening 22a of the first exhaust port 22, in a counterclockwise direction.

Within the cylinder 2, in an intake stroke, a swirl flow S of intake air (horizontal (transverse) swirl flowing about the central axis of the cylinder 2) is generated in a counterclockwise direction when viewed downwardly from above the cylinder 2. In this embodiment, the first intake port 18 is formed as a so-called "tangential port" configured to direct a flow of intake air flowing from the piston-side opening 18a thereof into the cylinder 2 toward a circumferential direction of the cylinder 2 (a forward direction of the swirl flow S of intake air flowing in the vicinity of the piston-side opening 18a of the first intake port 18). On the other hand, the second intake port 20 is formed as a so-called "helical port" configured to introduce intake air from the piston-side opening 20a into the cylinder 2 in a helical pattern. These the first and second intake ports 18, 20 make it possible to enhance the swirl flow S of intake air in the cylinder 2.

As shown in FIG. 3, the fuel injector 34 comprises a tubular-shaped valve body 50 internally formed with a fuel flow passage 48 to which fuel is introduced from the common rail, and a needle valve element 52 disposed in the fuel flow passage 48 of the valve body 50 in a forwardly and backwardly movable manner. The valve body 50 has a semispherical distal end 50a, and an end of the fuel flow passage 48 corresponding to the distal end 50a is formed as a semispherical auxiliary chamber 48a. Further, an inner surface of the valve body 50 around the auxiliary chamber 48a is formed as a seat portion 54 on which a distal end of the needle valve element 52 is to be seated when the needle valve element 52 is driven forwardly.

The distal end 50a of the valve body 50 is provided with a plurality of nozzle holes 56. Each of the nozzle holes 56 is provided such that it penetrates through the distal end 50a to communicate between an outer surface of the distal end 50a of the valve body 50 and the auxiliary chamber 48a. Specifically, in this embodiment, ten nozzle holes 56 in total are provided at the distal end 50a, such that they are arranged side-by-side circumferentially at approximately even intervals. Fuel is injected through these nozzle holes 56, in a radial pattern in top plan view.

The valve body 50 is provided with a not-shown solenoid, and the needle valve element 52 is configured to be selectively driven forwardly and backwardly by an attraction force of the solenoid. When the needle valve element 52 is driven forwardly and seated on the seat portion 54, the introduction of fuel into the auxiliary chamber 48a is blocked to stop the injection of fuel from the nozzle holes 56. On the other hand, when the needle valve element 52 is driven backwardly from the seated state (FIG. 3 illustrates such an unseated state), fuel is introduced into the auxiliary chamber 48a, and fuel starts to be injected from the nozzle holes 56. Here, a fuel injection amount can be adjusted by controlling a time period for backward driving of the needle valve element 52.

The fuel injector 34 is installed in a posture coaxial with the cylinder 2. Specifically, assuming that a straight line extending in an upward-downward direction through a center of the distal end 50a of the valve body 50 is defined as a central axis of the fuel injector 34, the fuel injector 34 is installed in a posture where the central axis thereof is coincident with the central axis of the cylinder 2.

As shown in FIG. 4, in the diesel engine 1 according to this embodiment, for example, in an operating range A1 where an engine load is extremely low, fuel is injected from the fuel injector 34 by split injection consisting of three pre-injections Qp1 and one main injection Qm1. In the main injection Qm1, fuel injection is started around top dead center of a compression stroke (top dead center at the time of completion of a compression stroke), and the fuel injection amount is set to about 1 to 5 mm³. In the pre-injections Qp1, fuel is injected before top dead center of a compression stroke in an amount less than that of the main injection Qm1.

On the other hand, in an operating range A2 which is a medium engine load range where the engine load is higher than that in the operating range A1, and is frequently used during vehicle acceleration, fuel is injected from the fuel injector 34 by split injection consisting of two pre-injections Qp2, one main injection Qm2, and one after-injection Qa2. In the main injection Qm2, fuel injection is started around top dead center of a compression stroke, and the fuel injection amount is set to about 10 to 30 mm³. In the pre-injections Qp2, fuel is injected before top dead center of a compression stroke in an amount less than that of the main injection Qm2. In the after-injections Qa2, fuel is injected after completion of the main injection Qm2 (in the course of an expansion stroke) in an amount less than that of the main injection Qm2.

As a fuel injection mode (number of times of fuel injection, fuel injection timing, fuel injection amount, etc.) in a non-illustrated operating range other than the operating ranges A1, A2, various patterns may be employed. Generally stated, the fuel injection amount of the main injection (fuel injection to be started around top dead center of a compression stroke) is apt to be increased as the engine load becomes higher. Therefore, for example, in an operating range where the engine load is higher than that in the operating range A2, the fuel injection amount of the main injection is further increased with respect to that (10 to 30 mm³) in the operating range A2.

The fuel injection modes in the operating ranges as mention above are realized by control of a not-shown PCM (Powertrain Control Module). Specifically, the PCM is operable to sequentially determine an engine operating state based on signals input from various sensors such as an airflow sensor, an engine speed sensor, and an accelerator position sensor (which are not illustrated), and control the fuel injector 34 so as to comply with a target fuel injection mode preliminarily set with respect to each engine operating state.

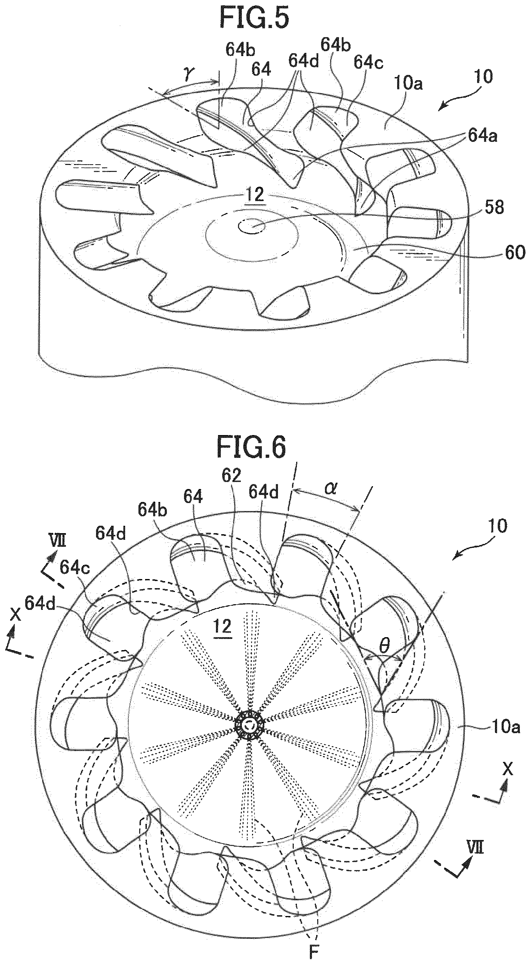

Next, with reference to FIGS. 5 to 7, the shape of the piston 10 in the diesel engine according to this embodiment will be described.

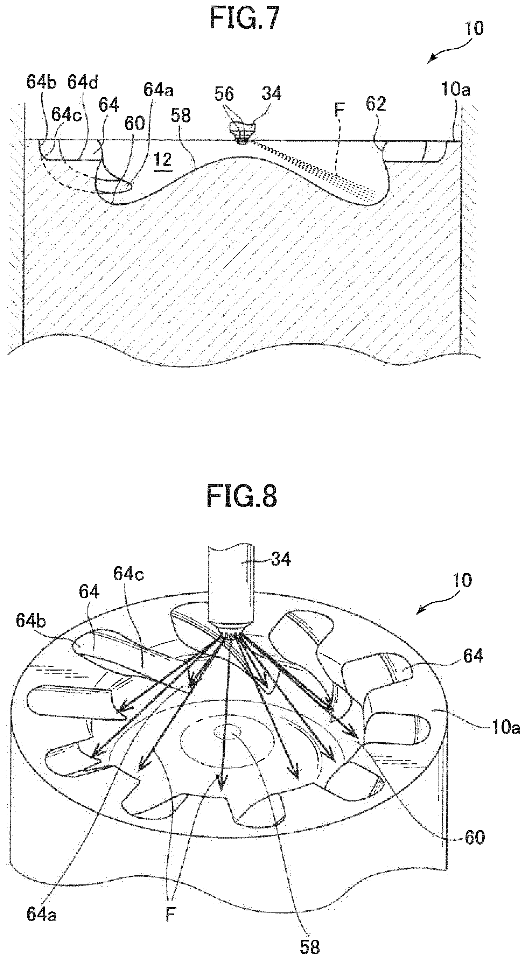

FIG. 5 is a perspective view of the piston 10 in the diesel engine according to this embodiment, and FIG. 6 is a top plan view of the piston 10 shown in FIG. 5. Further, FIG. 7 is a fragmentary sectional view of the piston 10, the cylinder head 6, etc., taken along the line VII-VII in FIG. 6.

Here, in FIG. 7, the piston 10 is shown in a state in which it is moved upwardly to a top dead center position, and, in FIGS. 6 and 7, fuel sprays injected from the nozzle holes 56 of the fuel injector 34 are denoted by the reference sign F. As can be understood from these figures, the cavity 12 is formed in a shape and a size capable of receiving fuel (fuel sprays F) injected from the fuel injector 34 at least when the piston 10 is located at the top dead center position.

As shown in FIGS. 5 to 7, the cavity 12 is formed as a so-called "reentrant cavity". Specifically, a wall surface defining the cavity 12 has: a central raised portion 58 having an approximately mountain-like shape; a peripheral concave portion 60 formed on a radially outward side of the piston 10 with respect to the central raised portion 58 to have a round shape in top plan view; and a lip portion 62 formed between the peripheral concave portion 60 and the crown surface 10a of the piston 10 (i.e., the periphery of the cavity 12) to have a round shape in top plan view.

The central raised portion 58 is raised such that it comes closer to the fuel injector 34 at a position closer to the center of the cavity 12, and formed such that the top of the central raised portion is located immediately below the distal end 50a of the fuel injector 34. The peripheral concave portion 60 is formed such that it is continuous with the central raised portion 58, and has an arc shape concaved toward the radially outward side of the piston 10 in vertical sectional view. The lip portion 62 is formed such that it is continuous with the peripheral concave portion 60, and has an arc shape convexed toward a radially inward side of the piston 10 in vertical sectional view, as shown in FIG. 7. Each of the nozzle holes 56 of the fuel injector 34 is directed toward the vicinity of a connection between the lip portion 62 and the peripheral concave portion 60.

As shown in FIGS. 5 and 6, the lip portion 62 is formed with a plurality of grooves 64 each concaved from the periphery of the cavity 12 toward the radially outward side of the piston 10.

Each of the grooves 64 has one end on the side opposite to the cylinder head 6 (one end on the side of the peripheral concave portion 60 of the cavity 12; hereinafter referred to as "lower end 64a"), and the other end on the side of the cylinder head 6 (the other end on the side of the crown surface 64a of the piston 10; hereinafter referred to as "upper end 64b"), and extends from the lower end 64a toward the upper end 64b, while inclining in a flow direction of the swirl flow S of intake air (in this embodiment, in the counterclockwise direction when viewed downwardly from the side of the cylinder head 6 (from above the cylinder 2)).

More specifically, as shown in FIG. 6, the groove 64 is formed in a U-like concave shape which is concaved from a distal end of the lip portion 62 protruding toward the radially inward side of the piston 10, toward the radially outward side of the piston 10, in top plan view. That is, a wall surface defining the groove 64 has a bottom surface 64c extending in the circumferential direction of the piston 10 in top plan view, and two side surfaces 64d each extending toward the radially inward side of the piston 10 along a respective one of opposite edges of the bottom surfaces 64c.

The bottom surface 64c of the groove 64 is formed such that it incliningly extends from the peripheral concave portion 60, i.e., from the lower end 64a, toward the radially outward side of the piston 10, and, curves so as to become more closely parallel to an inner peripheral surface of the cylinder 2, at a position closer to the upper end 64b, in top plan view.

In this embodiment, a central angle α defined between two straight lines connecting a radial center of the piston 10 and respective ones of the opposite edges of the bottom surface 54c, in top plan view (this angle α is equivalent to the width of the groove 64) is set to, e.g., 14° in the crown surface 10a of the piston 10. Further, in this embodiment, an angle θ defined between the bottom surface 64c and the peripheral concave portion 60 at the lower end 64a of the groove 64 is set to, e.g., 45°.

Further, an angle γ defined between each of the side surfaces 64d and an axial direction of the piston 10 (this angle γ is equivalent to an inclination angle of the groove 64) may take various values. In this embodiment, the side surface 64d is formed such that it inclines with respect to the axial direction of the piston 10 in the flow direction of the swirl S of intake air by 45°.

Each of the grooves 64 is disposed such that the vicinity of the lower end 64a thereof is located in a directional direction of a corresponding one of the nozzle holes 56 of the fuel injector 34. In this embodiment, the ten nozzle holes 56 in total are arranged side-by-side circumferentially at approximately even intervals, so that fuel is injected in a radial pattern in top plan view, as mentioned above. Therefore, in this embodiment, ten grooves 64 in total are arranged side-by-side circumferentially at approximately even intervals, such that the vicinity of the lower end 64a of each of the grooves 64 is located in the directional direction of a corresponding one of the nozzle holes 56 of the fuel injector 34, as shown in FIG. 6.

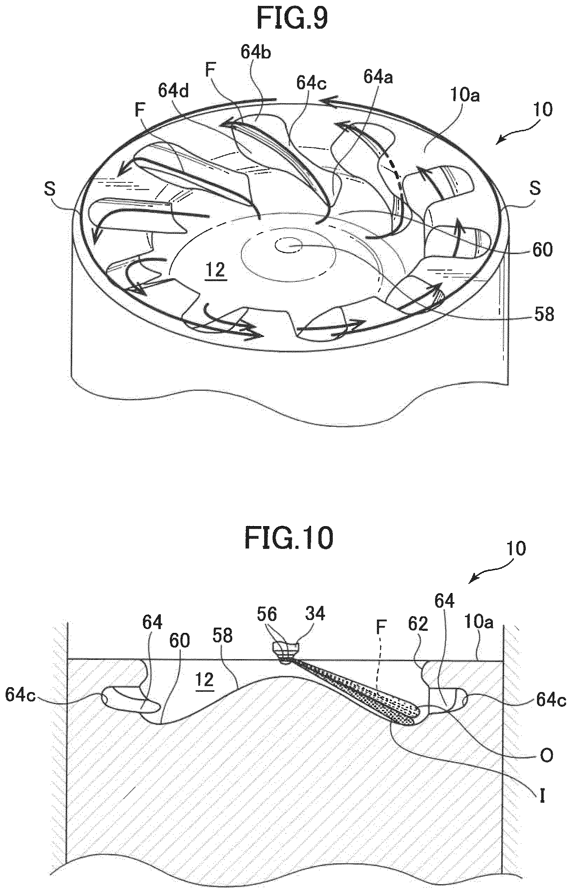

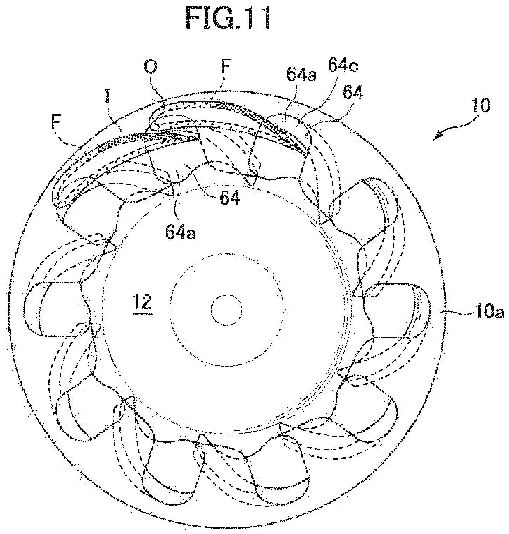

Next, with reference to FIGS. 8 to 11, functions of the diesel engine 1 according to this embodiment will be described. FIG. 8 is a perspective view conceptually showing the flows of fuel sprays within a combustion chamber in the diesel engine according to this embodiment, and FIG. 9 is a perspective view conceptually showing the flows of fuel sprays and the flow of air within the combustion chamber in the diesel engine according to this embodiment. Further, FIG. 10 is a fragmentary sectional view conceptually showing the flow of fuel spray within the combustion chamber in the diesel engine according to this embodiment, taken along the line X-X in FIG. 6, and FIG. 11 is a perspective view conceptually showing the flows of neighboring fuel sprays within the combustion chamber in the diesel engine according to this embodiment

When a compression stroke progresses, and fuel is injected from the fuel injector 34 around top dead center of the compression stroke, each of ten fuel sprays F injected from the nozzle holes 56 toward the radially outward side of the piston 10 reaches the vicinity of the lower end 64a of a corresponding one of the grooves 64, and partly enters the groove 64.

As shown in FIG. 9, the fuel spray F having entered the groove 64 moves toward the radially outward side of the piston 10 and the side of the cylinder head 6 along the bottom surface 64c and the side surfaces 64d of the groove 64, and then flows out from the upper end 64b of the groove 64 toward a region above the crown surface 10a of the piston 10, along the circumferential direction of the piston 10.

As mentioned above, a counterclockwise swirl flow S of intake air is generated in the cylinder 2 during an intake stroke when viewed from above the cylinder, wherein the swirl flow S in the cylinder 2 is enhanced by the first and second intake ports 18, 20. In this situation, each of the grooves 64 extends from the lower end 64a toward the upper end 64b, while inclining in the flow direction of the swirl flow S.

Thus, the fuel spray F reaching the upper end 64b of the groove 64 is drawn by the swirl flow S flowing just above the upper end 64b, so that it flows out of the groove 64, and merges with the swirl flow S to swirl about the central axis of the cylinder 2.

As above, in this embodiment, a fuel spray S injected from each of the nozzle holes 56 toward the radially outward side of the piston 10 moves along a corresponding one of the grooves 64 gently and helically upwardly toward the side of the cylinder head 6, while changing direction to the circumferential direction of the piston 10. Thus, as compared with the case where a fuel spray injected from the fuel injector toward the radially outward side of the piston keeps moving in the radial direction of the piston and reaches the inner surface of the cylinder head or cylinder liner, as in the conventional diesel engine, a moving path between a point at which a fuel spray F is injected from each of the nozzle holes 56 and a point at which the fuel spray F subsequently reaches the inner surface of the cylinder head 6 or the cylinder 2 can be extended. This makes it possible to prevent the fuel spray F from reaching the inner surface of the cylinder head 6 or the cylinder 2 having a relatively low temperature, before completion of fuel combustion, thereby reducing cooling loss.

In the above embodiment, fuel injected from each of the nozzle holes 56 moves toward the vicinity of the lower end 64a of a corresponding one of the grooves 64, while undergoing diffusion combustion. In the resulting fuel spray F, a region on the side of the wall surface of the cavity 12 (a lower region denoted by the reference sign I in FIG. 10; hereinafter referred to as "soot region") flows from the peripheral concave portion 60 while facing the bottom surface 64c of the groove 64, so that it is less likely to be mixed with air, leading to generation of soot due to the lack of oxygen.

On the other hand, in the fuel spray F just after being injected from each of the nozzle hole 56, a region on the side opposite to the wall surface of the cavity 12 (an upper region denoted by the reference sign O in FIG. 10; hereinafter referred to as "incomplete combustion region") is in contact with surrounding air, i.e., can obtain sufficient oxygen, so that it undergoes complete combustion.

When this fuel spray F changes direction along the bottom surface 64c and the side surfaces 64d of the groove 64, and flows out from the upper end 64b along the circumferential direction of the piston 10, the soot region I in the fuel spray F having flowed out of the groove 64 is brought into contact with an incomplete combustion region O in a neighboring one of the fuel sprays F located on the side opposite to a direction along which the fuel spray F flows out of the groove 64, as shown in FIG. 11. In such an incomplete combustion region O, there is a large amount of OH radical generated in the process of combustion, so that soot existing in the soot region I is oxidized by OH radicals. Thus, as compared with the case where a fuel spray injected from the fuel injector toward the radially outward side of the piston keeps moving in the radial direction of the piston, as in the conventional diesel engine, it is possible to reduce the amount of soot contained in exhaust gas.

Next, some modifications of the above embodiment will be described.

The above embodiment has been described based on an example where: the central angle α defined between the two straight lines connecting the radial center of the piston 10 and respective ones of the opposite edges of the bottom surface 54c, in top plan view is set to, e.g., 14°; the angle θ defined between the bottom surface 64c and the peripheral concave portion 60 at the lower end 64a of the groove 64 is set to, e.g., 45°; and each of the side surfaces 64d is formed such that it inclines with respect to the axial direction of the piston 10 in the flow direction of the swirl S of intake air by 45°. However, each of the grooves 64 may be formed in dimensions different therefrom.

Further, the above embodiment has been described based on an example where the fuel injector 34 has the ten nozzle holes 27. However, the present invention may be applied to a diesel engine equipped with a fuel injector 34 having a different plural number of nozzle holes 27.

Further, the above embodiment has been described based on an example where a counterclockwise swirl flow S is generated in the cylinder 2 during an intake stroke when viewed from above the cylinder, wherein the swirl flow S in the cylinder 2 is enhanced by the first and second intake ports 18, 20. However, the same groove 64 as that in the above embodiment may be provided in the periphery of a cavity 12 in a diesel engine configured to generate no swirl flow. In this case, it is also possible to extend the moving path between the point at which a fuel spray F is injected from each of the nozzle holes F and the point at which the fuel spray F subsequently reaches the inner surface of the cylinder head 6 or the cylinder 2, thereby reducing cooling loss.

Next, functions/effects of the diesel engines 1 according to the above embodiment and the above modified embodiments will be described.

Firstly, the crown surface 10a of the piston 10 is formed with the grooves 62 each concaved from the periphery of the cavity 12 toward the radially outward side of the piston 10, wherein each of the grooves 64 extends from the lower end 64a on the side opposite to the cylinder head 6 toward the upper end 64b on the side of the cylinder head 6, while inclining in the circumferential direction of the piston 10, and each of the nozzle holes 56 of the fuel injector 34 is directed toward a corresponding one of the grooves 64, so that a fuel spray F injected from each of the nozzle holes 56 moves along a corresponding one of the grooves 64 gently and helically upwardly toward the side of the cylinder head 6, while changing direction to the circumferential direction of the piston 10. Thus, as compared with the case where a fuel spray injected from the fuel injector keeps moving in an injection direction and reaches the inner surface of the cylinder head or cylinder liner, the moving path between the point at which a fuel spray F is injected from each of the nozzle holes 56 and the point at which the fuel spray F subsequently reaches the inner surface of the cylinder head 6 or the cylinder 2 can be extended. This makes it possible to prevent the fuel spray F from reaching the inner surface of the cylinder head 6 or the cylinder 2 having a relatively low temperature, before completion of fuel combustion, thereby reducing cooling loss.

In particular, the cylinder head 6 is formed with the intake ports 18, 20 configured to generate a swirl flow S in the cylinder 2, wherein each of the grooves 64 extends from the lower end 64a on the side opposite to the cylinder head 6 toward the upper end 64b on the side of the cylinder head 6, while inclining in a flow direction of the swirl flow S, so that it is possible to enable the fuel spray S which has reached the upper end 64b of the groove 60 to be drawn into the swirl flow S flowing just above the upper end 64b and swirled about the central axis of the cylinder 2. This makes it possible to reliably extend the moving path between the point at which a fuel spray F is injected from each of the nozzle holes 56 and the point at which the fuel spray F subsequently reaches the inner surface of the cylinder head 6 or the cylinder 2, thereby preventing the fuel spray F from reaching the inner surface of the cylinder head 6 or the cylinder 2 having a relatively low temperature, before completion of fuel combustion.

Secondly, the plural grooves 64 are formed in the crown surface 10a of the piston 10, so that the flow direction of each of the fuel sprays F injected from the nozzle holes 56 can be reliably changed to the circumferential direction of the piston 10 by the plural grooves 56. This makes it possible to more reliably prevent the fuel spray F from reaching the inner surface of the cylinder head 6 or the cylinder 2 having a relatively low temperature, before completion of fuel combustion, thereby reducing cooling loss.

Thirdly, the plural nozzle holes 56 are formed in the fuel injector 34, such that they are directed, respectively, toward the plural grooves 64, so as to inject fuel into the cavity 12 in a radial pattern in top plan view.

Further, fuel sprays F injected from the plural nozzle holes 56 undergo directional change along corresponding ones of the plural grooves 64, and flow out from the upper ends 64b of the corresponding grooves 64 along the circumferential direction of the piston 19, so that a region I containing a large amount of soot, in each of the fuel sprays F which have flowed out of the corresponding grooves 64, can be brought into contact with a region O containing a large amount of OH radical, in a neighboring one of the fuel sprays F located on the side opposite to a direction along which the fuel spray F flows out of the corresponding groove 64. This makes it possible to oxidize soot by OH radicals to reduce the amount of soot contained in exhaust gas.

### LIST OF REFERENCE SIGNS

- 1: diesel engine
- 2: cylinder
- 6: cylinder head
- 10: piston
- 10a: crown surface
- 12: cavity
- 18: first intake port
- 20: second intake port
- 22: first exhaust port
- 24: second exhaust port
- 34: fuel injector
- 56: nozzle hole
- 58: central raised portion
- 60: peripheral concave portion
- 62: lip portion
- 64: groove
- 64a: lower end
- 64b: upper end
- 64c: bottom surface
- 64d: side surface
- S: swirl flow

## Claims

1. A diesel engine comprising:
a cylinder head covering one end of a cylinder;
a piston having a crown surface opposed to the cylinder head and performing a reciprocating movement within the cylinder; and
a fuel injector attached to the cylinder head,
wherein the crown surface of the piston is formed with a cavity which is concaved toward a side opposite to the cylinder head and which has a round shape in top plan view, and a groove which is recessed radially outward from a periphery of the cavity,
the groove has a first end on a side opposite to the cylinder head and a second end on a side of the cylinder head, and extends from the first end toward the second end while inclining in a circumferential direction of the piston, and
the fuel injector is formed with a nozzle hole directed toward the groove.

2. The diesel engine according to claim 1, wherein the cylinder head is formed with an intake port so as to generate a swirl flow within the cylinder, and the groove extends from the first end on the side opposite to the cylinder head toward the second end on the side of the cylinder head, while inclining in a flow direction of the swirl flow.

3. The diesel engine according to claim 1 or 2, wherein the crown surface of the piston is formed with a plurality of the grooves.

4. The diesel engine according to claim 3, wherein the fuel injector is formed with a plurality of the nozzle holes which are directed toward the plurality of the grooves, respectively, so as to inject fuel into the cavity in a radial pattern in top plan view.
